# EUROPÄISCHE PATENTSCHRIFT

(11) **EP 0 894 663 B1**
(45) Veröffentlichungstag und Bekanntmachung des Hinweises auf die Patenterteilung: **26.10.2005**
(21) Anmeldenummer: 98109274.5
(22) Anmeldetag: 22.05.1998
(51) Int. Cl.: B60Q 1/04

(54) **Befestigungsanordnung einer Beleuchtungseinrichtung an einem Fahrzeug**
Mounting arrangement of a lighting unit for vehicle
Dispositif de fixation d'une unité d'éclairage pour véhicule

(30) Priorität: 30.07.1997 DE 19732745
(43) Veröffentlichungstag der Anmeldung: 03.02.1999
(73) Patentinhaber: Automotive Lighting Reutlingen GmbH, 72762 Reutlingen (DE)
(72) Erfinder: Dobler, Karl-Otto, 72768 Reutlingen (DE); Steinert, Guenter, 72770 Reutlingen (DE)
(74) Vertreter: Dreiss, Fuhlendorf, Steimle & Becker

(56) Entgegenhaltungen:
- EP-A- 0 422 405

## Beschreibung

### Stand der Technik

Die Erfindung geht aus von einer Befestigungsanordnung einer Beleuchtungseinrichtung an einem Fahrzeug nach der Gattung des Anspruchs 1.

Eine solche Befestigungsanordnung ist.durch die DE 22 09 541 A1 und EP 0 422 405 A1 bekannt. Bei dieser Befestigungsanordnung ist die Beleuchtungseinrichtung in Form einer Scheinwerfer-Leuchten-Einheit über mehrere lösbare Befestigungsstellen am Fahrzeug befestigbar. Im Bereich einer Befestigungsstelle ist ein Scharnier vorgesehen, durch das die Beleuchtungseinrichtung um eine vertikal verlaufende Achse an der Aufnahme ein- und ausschwenkbar ist, wenn eine weitere vom Scharnier beabstandete Befestigungsstelle gelöst ist. Das Scharnier ist als zusätzliches separates Bauteil mit der Beleuchtungseinrichtung und dem Fahrzeug jeweils fest verbunden, beispielsweise über Verschraubungen. Eine Verschwenkung der Beleuchtungseinrichtung ist dabei vorgesehen, um an deren Rückseite angeordnete Lichtquellen für einen Austausch zugänglich zu machen. Zu einem Aus- und Einbau der Beleuchtungseinrichtung muß jedoch neben dem Lösen der anderen Befestigungsstellen auch das Scharnier an der Aufnahme am Fahrzeug oder an der Beleuchtungseinrichtung gelöst werden, so daß der Aus- und Einbau entsprechend aufwendig ist.

### Vorteile der Erfindung

Die erfindungsgemäße Befestigungsanordnung einer Beleuchtungseinrichtung an einem Fahrzeug hat demgegenüber den Vorteil, daß die Verschwenkbarkeit der Beleuchtungseinrichtung ohne zusätzliches Scharnier ermöglicht ist und außerdem der Ein- und Ausbau der Beleuchtungseinrichtung auf einfache Weise in der ausgeschwenkten Lage der Beleuchtungseinrichtung ermöglicht ist.

In den abhängigen Ansprüchen sind vorteilhafte Ausgestaltungen und Weiterbildungen der erfindungsgemäßen Befestigungsanordnung angegeben. Durch die Weiterbildung gemäß Anspruch 2 ist eine sichere Fixierung der Beleuchtungseinrichtung am Aufnahmeteil in ihrer eingeschwenkten Lage erreicht. In den Ansprüchen 3 und 4 sind einfache Ausführungen von Verriegelungseinrichtungen angegeben. Die Ausführung der Verriegelungseinrichtung gemäß Anspruch 5 ermöglicht deren Betätigung bei der Verschwenkung der Beleuchtungseinrichtung um die Schwenkachse ohne zusätzlichen Aufwand. Durch die Weiterbildung gemäß Anspruch 6 ist eine sichere Führung der Beleuchtungseinrichtung bei deren Verschwenkung um die Schwenkachse erreicht. Die Weiterbildung gemäß Anspruch 10 ermöglicht eine in Richtung der Schwenkachse spielfreie Führung der Beleuchtungseinrichtung. Die Ausbildung gemäß Anspruch 12 ermöglicht einen einfachen Aus- unud Einbau der Beleuchtungseinrichtung im Servicefall.

### Zeichnung

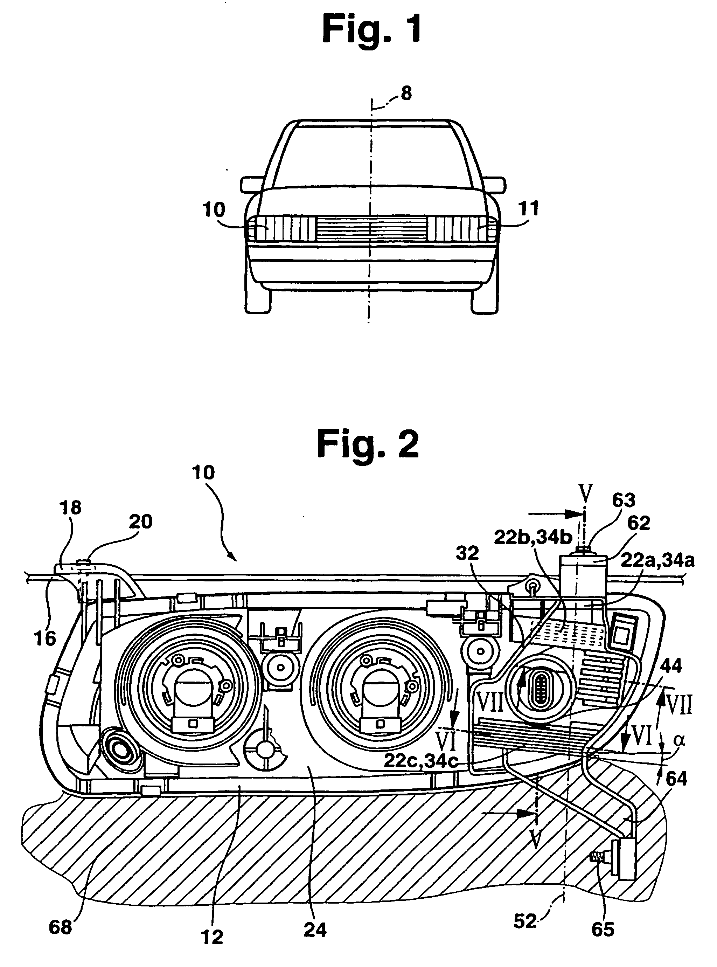

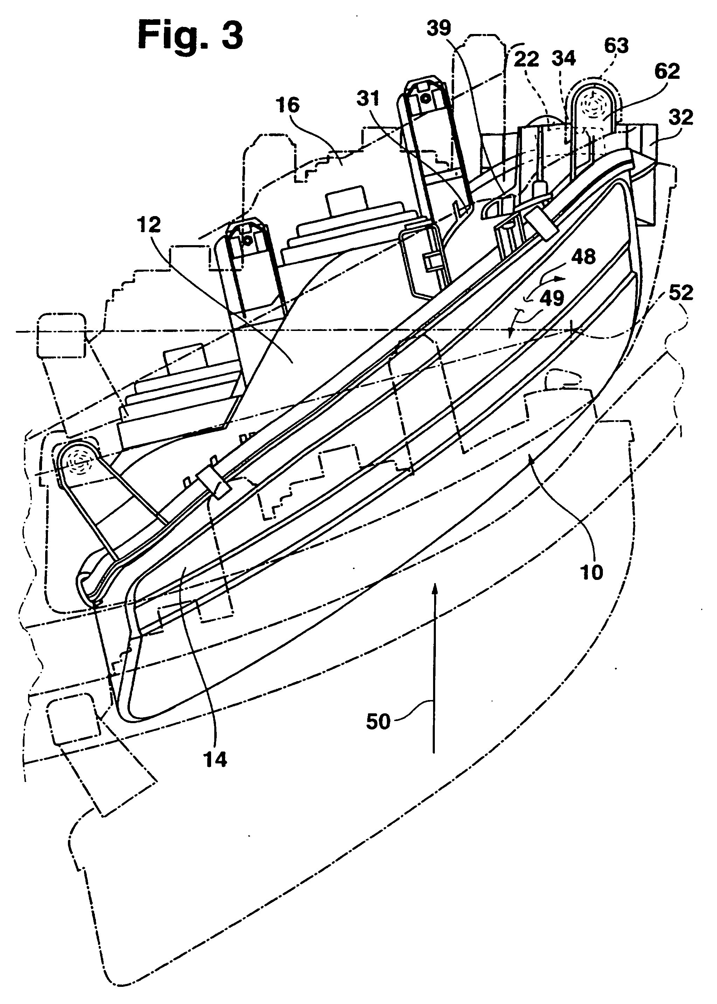

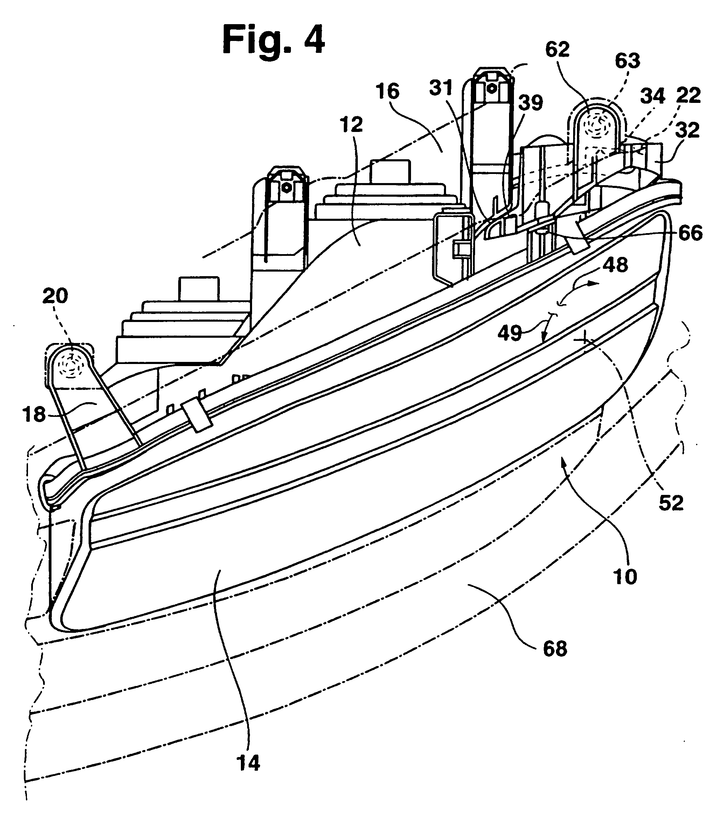

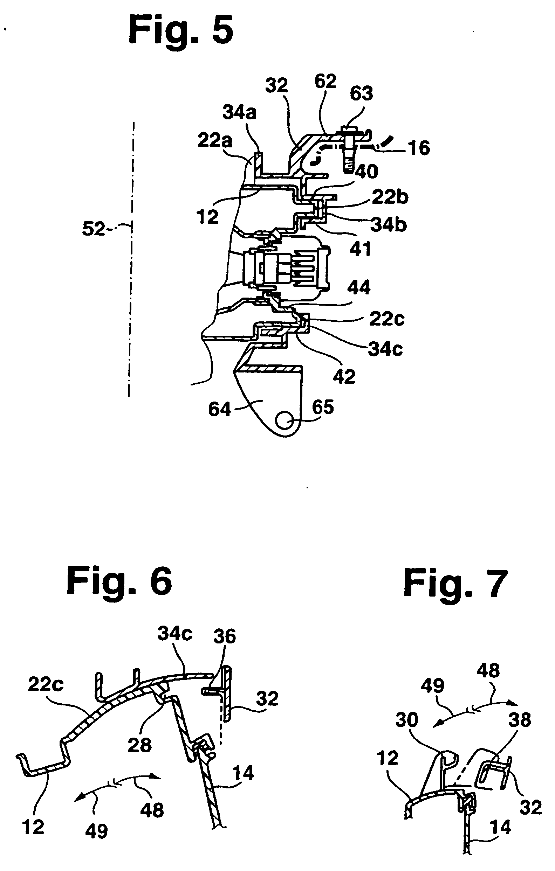

Ein Ausführungsbeispiel der Erfindung ist in der Zeichnung dargestellt und in der nachfolgenden Beschreibung näher erläutert. Es zeigen Figur 1 einen Ausschnitt eines Fahrzeugs mit einer Beleuchtungseinrichtung, Figur 2 die Beleuchtungseinrichtung in einer Rückansicht in einer eingeschwenkten Lage, Figur 3 die Beleuchtungseinrichtung in einer Ansicht von oben in einer ausgeschwenkten Lage, Figur 4 die Beleuchtungseinrichtung in einer Ansichtt von oben in einer eingeschwenkten Lage, Figur 5 einen Ausschnitt der Beleuchtungseinrichtung in einem Schnitt entlang Linie V-V in Figur 2, Figur 6 einen Ausschnitt der Beleuchtungseinrichtung in einem Schnitt entlang Linie VI-VI in Figur 2 mit durchgezogenen Linien in einer ausgeschwenkten Lage und mit gestrichelten Linien in einer eingeschwenkten Lage und Figur 7 einen Ausschnitt der Beleuchtungseinrichtung in einem Schnitt entlang Linie VII-VII in Figur 2 mit durchgezogenen Linien in einer ausgeschwenkten Lage und mit gestrichelten Linien in einer eingeschwenkten Lage.

### Beschreibung der Ausführungsbeispiele

Ein in Figur 1 in der Vorderansicht dargestelltes Fahrzeug, insbesondere ein Kraftfahrzeug, weist in bekannter Weise an seinem Vorderende zwei Beleuchtungseinrichtungen 10,11 auf, die beispielsweise als Scheinwerfer oder als Scheinwerfer-Leuchteneinheiten ausgebildet sein können, die wenigstens einen Scheinwerfer und eine Leuchte, beispielsweise eine vordere Blinkleuchte, aufweisen. Die Beleuchtungseinrichtungen 10,11 sind am Fahrzeug lösbar an jeweils einer Aufnahme befestigt, wobei nachfolgend beispielhaft für die Beleuchtungseinrichtung 10 deren Befestigungsanordnung am Fahrzeug näher beschrieben wird.

Die Beleuchtungseinrichtung 10 weist ein Gehäuse 12 auf, in dem ein oder mehrere nicht dargestellte Reflektoren mit jeweiliger Lichtquelle angeordnet sind und dessen Lichtaustrittsöffnung mit einer lichtdurchlässigen Scheibe 14 abgedeckt ist. Das Gehäuse 12 ist über mehrere Befestigungsstellen lösbar am Fahrzeug befestigbar, beispielsweise an einem Frontteil 16 des Fahrzeugs in einer als Vertiefung ausgebildeten Aufnahme. Von der Rückseite des Gehäuses 12 steht nahe einem seitlichen Randbereich und nahe dem oberen Randbereich des Gehäuses 12 als Teil einer ersten Befestigungsstelle ein Träger 18 ab, über den das Gehäuse 12 beispielsweise mittels einer durch eine Öffnung im Träger 18 hindurchgesteckte Schraube 20 am Frontteil 16 des Fahrzeugs starr befestigbar ist. Der Träger 18 ist beispielsweise nahe dem zur Längsmittelebene 8 des Fahrzeugs weisenden inneren Randbereich des Gehäuses 12 angeordnet. Nahe dem anderen seitlichen Rand, beim dargestellten Ausführungsbeispiel nahe dem der Längsmittelebene 8 des Fahrzeugs abgewandten äußeren Rand des Gehäuses 12 ist an dessen Rückseite wenigstens ein Abschnitt 22 angeordnet, der in zumindest annähernd horizontalen Ebenen vom Gehäuse 12 weg konvex und zumindest annähernd kreisbogenförmig gekrümmt ausgebildet ist. Beim dargestellten Ausführungsbeispiel sind wie in Figur 2 dargestellt drei Abschnitte 22a,b,c in vertikaler Richtung zueinander versetzt angeordnet, wobei diese jeweils vom Gehäuse 12 weg konvex und zumindest annähernd kreisbogenförmig gekrümmt sind und die Mittelpunkte der Kreisbögen der Abschnitte 22a,b,c zumindest annähernd auf einer gemeinsamen Achse 52 liegen. Die Abschnitte 22a,b,c können auch wie in Figur 2 dargestellt in horizontaler Richtung zueinander versetzt angeordnet sein, wobei deren Krümmungsmittelpunkte auch dann zumindest annähernd auf der gemeinsamen Achse 52 liegen. Weiterhin können die Abschnitte 22a,b,c auch wie in Figur 5 dargestellt in horizontalen Ebenen unterschiedlich weit von der Rückwand 24 des Gehäuses 12 hervorstehen, wobei jedoch auch hierbei die Mittelpunkte von deren kreisbogenförmigen Krümmungen zumindest annähernd auf der gemeinsamen Achhse 52 liegen. Die Abschnitte 22a,b,c sind vorzugsweise einstückig am Gehäuse 12 angeformt, das insbesondere aus Kunststoff besteht und durch Spritzgießen hergestellt ist. Es kann auch vorgesehen sein, daß wenigstens einer der Abschnitte 22a,b,c durch mehrere schmale, zueinander in Richtung der Achse 52 beabstandete Rippen gebildet ist, die jeweils an ihren vom Gehäuse 12 wegweisenden Rändern entsprechend konvex gekrümmt sind.

Wenigstens einer der Abschnitte 22a,b,c weist wie in Figur 6 beispielhaft für den Abschnitt 22c dargestellt eine zum äußeren Rand des Gehäuses 12 weisende etwa senkrecht zu dessen Krümmung angeordnete Stufe 26 auf, in der eine Ausnehmung 28 in Form einer Vertiefung ausgebildet ist, die etwa tangential zur Krümmung des Abschnitts 22a,b,c verläuft. Von der Rückwand 24 des Gehäuses 12 steht außerdem wie in Figur 7 dargestellt wenigstens ein L-förmiger Haken 30 ab, dessen freier Endbereich etwa tangential zur Krümmung der Abschnitte 22 verläuft und zum äußeren Rand des Gehäuses 12 weist. Der freie Endbereich des Hakens 30 kann auch zum Gehäuse 12 hin konkav gekrümmt verlaufen und dabei insbesondere etwa kreisbogenförmig sein, wobei dessen Mittelpunkt zumindest annähernd auf der gemeinsamen Achse 52 liegt. Der Haken 30 ist in vertikaler Richtung bezüglich der Abschnitte 22a,b,c versetzt angeordnet, beispielsweise zwischen diesen. Es kann außerdem von der oberen Wandung des Gehäuses 12 nach oben eine Rippe 31 abstehen, die an ihrer entgegen der Einschubrichtung 50 weisenden Vorderseite eine konkav gekrümmte Anlauffläche aufweisen kann.

Die Aufnahme am Fahrzeug weist einen mit den vorstehend erläuterten Abschnitten 22a,b,c des Gehäuses 12 der Beleuchtungseinrichtung 10 zusammenwirkenden Teil 32 auf. An dem Aufnahmeteil 32 sind wie in Figur 5 dargestellt entsprechend der Anzahl der Abschnitte 22a,b,c schalenartige Bereiche 34a,b,c angeordnet, die in zumindest annähernd horizontalen Ebenen, wie in Figur 6 beispielhaft für den Schalenbereich 34c dargestellt, konkav gekrümmt ausgebildet sind, wobei die Krümmungen der Schalenbereiche 34a,b,c zumindest annähernd kreisbogenförmig sind. Die Mittelpunkte der Krümmungen der Schalenbereiche 34a,b,c liegen zumindest annähernd auf einer gemeinsamen Achse 52. Zum äußeren Rand des Gehäuses 12 hin ist am Aufnahmeteil 32 wie in Figur 6 dargestellt neben wenigstens einem Schalenbereich 34c ein Vorsprung 36 angeordnet, der bezüglich des Schalenbereichs 34c etwas zum Gehäuse 12 hin nach vorne versetzt ist und zu dem Schalenbereich 34c hinweist. Außerdem ist am Aufnahmeteil 32 wie in Figur 7 dargestellt wenigstens ein weiterer zum Gehäuse 12 hin abstehender Vorsprung 38 vorhanden, der derart angeordnet ist, daß er mit dem Haken 30 des Gehäuses 12 in nachfolgend noch erläuterter Weise zusammenwirken kann. Der Vorsprung 38 kann an seiner vom Gehäuse 12 wegweisenden Seite etwa tangential zur Achse 52 verlaufen oder konvex gekrümmt ausgebildet sein mit kreisbogenförmiger Krümmung, deren Mittelpunkt zumindest annähernd auf der gemeinsamen Achse 52 liegt. Zusätzlich kann am Aufnahmeteil 32 noch ein Vorsprung 39 angeordnet sein, der derart angeordnet ist, daß er mit der Rippe 31 des Gehäuses 12 zusammenwirken kann und der ansonsten gleich ausgebildet ist wie der Vorsprung 38. Der Vorsprung 39 kann an seiner vom Gehäuse 12 weg in Einschubrichtung 50 weisenden Rückseite konvex gekrümmt ausgebildet sein.

Der Schalenbereich 34b des Aufnahmeteils 32 ist wie in Figur 5 dargestellt in vertikaler Richtung durch eine zumindest annähernd senkrecht zum Schalenbereich 34b verlaufende Wandung 40 nach oben und durch eine ebenfalls zumindest annähernd senkrecht zu diesem verlaufende Wandung 41 nach unten begrenzt, wobei die Wandungen 40,41 von der gekrümmten Schale aus nach vorne zum Gehäuse 12 hin abstehen. Der Schalenbereich 34c ist nach unten ebenfalls durch eine zumindest annähernd senkrecht zu diesem verlaufende Wandung 42 begrenzt, die von der gekrümmten Schale nach vorne zum Gehäuse 12 hin absteht. Oberhalb des Schalenbereichs 34c ist am Aufnahmeteil 32 ein federndes Element 44 beispielsweise in Form einer Blattfeder angeordnet, die vorzugsweise einstückig am Aufnahmeteil 32 angeformt ist, und das in vertikaler Richtung federnd bewegbar ist.

Bei der Montage der Beleuchtungseinrichtung 10 in der Aufnahme wird zunächst deren Gehäuse 12 in Pfeilrichtung 50 gemäß Figur 3 entgegen der Fahrtrichtung des Fahrzeugs von vorne her an die Aufnahme herangeführt. Die Beleuchtungseinrichtung 10 befindet sich dabei in einer in Figur 3 dargestellten ausgeschwenkten Lage. Beim Einschieben der Beleuchtungseinrichtung 10 in Pfeilrichtung 50 gelangen die Abschnitte 22a,b,c des Gehäuses 12 mit ihren gekrümmten Bahnen in Anlage an die gekrümmten Bahnen der Schalenbereiche 34a,b,c des Aufnahmeteils 32. In dieser Lage ist der Träger 18 des Gehäuses 12 noch mit Abstand zu dessen vorgesehenem Befestigungspunkt an der Aufnahme angeordnet. Die Abschnitte 22a,b,c sind gleitverschiebbar in den Schalenbereichen 34a,b,c angeordnet, wobei die Mittelpunkte der Krümmungen der Abschnitte 22a,b,c und der Schalenbereiche 34a,b,c zumindest annähernd auf der gemeinsamen Achse 52 liegen. Bei der Gleitverschiebung der Abschnitte 22a,b,c in den Schalenbereichen 34a,b,c führt das Gehäuse 12 eine Schwenkbewegung um die Achse 52 aus. Die Schwenkachse 52 verläuft zumindest annähernd vertikal und durch die Beleuchtungseinrichtung 10 hindurch. Der Abschnitt 22b des Gehäuses 12 ist mit geringer Bewegungsmöglichkeit in Richtung der Schwenkachse 52 zwischen den den Schalenbereich 34b nach oben und nach unten begrenzenden Wandungen 40 und 41 angeordnet. Der Abschnitt 22c des Gehäuses 12 liegt auf der den Schalenbereich 34c nach unten begrenzenden Wandung 42 auf und das federnde Element 44 greift unter Vorspannung an der Oberseite des Abschnitts 22c an, so daß dieser in Anlage an der Wandung 42 gehalten wird und in Richtung der Schwenkachse 52 spielfrei zwischen der Wandung 42 und dem federnden Element 44 angeordnet ist. Durch die in Richtung der Schwenkachse 52 zueinander beabstandeten Abschnitte 22a,b,c und Schalenbereiche 34a,b,c ist sichergestellt, daß die Beleuchtungseinrichtung 10 nicht zur Schwenkachse 52 schräg gestellt oder verkantet werden kann sondern exakt um die Schwenkachse 52 verschwenkbar geführt ist.

Die Beleuchtungseinrichtung 10 wird zu deren weiterer Montage ausgehend von ihrer in Figur 3 dargestellten ausgeschwenkten Lage in Pfeilrichtung 48 in eine in Figur 4 dargestellte eingeschwenkte Lage verschwenkt. In der eingeschwenkten Lage der Beleuchtungseinrichtung 10 befindet sich der Träger 18 an seinem vorgesehenen Befestigungspunkt an der Aufnahme am Fahrzeugteil 16 und wird mittels der Schraube 20 fixiert. In der eingeschwenkten Lage der Beleuchtungseinrichtung 10 tritt der Vorsprung 36 des Aufnahmeteils 32 in die Vertiefung 28 des Abschnitts 22c des Gehäuses 12 in tangentialer Richtung bezüglich der Schwenkachse 52 ein, wie dies mit gestrichelten Linien in Figur 6 dargestellt ist. Außerdem hintergreift der Haken 30 des Gehäuses 12 den Vorsprung 38 des Aufnahmeteils 32 in tangentialer Richtung bezüglich der Schwenkachse 52 wie dies in Figur 7 mit gestrichelten Linien dargestellt ist. Die Rippe 31 des Gehäuses 12 hintergreift außerdem den Vorsprung 39 des Aufnahmeteils 32. Durch den in die Vertiefung 28 eingreifenden Vorsprung 36, sowie den den Vorsprung 38 hintergreifenden Haken 30 und die den Vorsprung 39 hintergreifende Rippe 31 ist die Beleuchtungseinrichtung 10 in ihrer eingeschwenkten Lage gegen Herausziehen entgegen Montagerichtung 50 gesichert und diese zusammenwirkenden Teile Vorsprung 36 und Vertiefung 28, Vorsprung 38 und Haken 30 sowie Vorsprung 39 und Rippe 31 bilden somit jeweils eine Verriegelungseinrichtung.

Zum Ausbau der Beleuchtungseinrichtung 10 wird zunächst deren Träger 18 durch Entfernen der Schraube 20 von der Aufnahme gelöst. Anschließend kann die Beleuchtungseinrichtung 10 um die Schwenkachse 52 mit ihrem inneren Randbereich von der Aufnahme weggeschwenkt werden in Pfeilrichtung 49 in ihre ausgeschwenkte Lage, so daß der Vorsprung 36 aus der Vertiefung 28 austritt und die Haken 30,31 die Vorsprünge 38,39 freigeben und die Beleuchtungseinrichtung 10 entgegen Pfeilrichtung 50 aus der Aufnahme herausgezogen werden kann. Der Winkel, um den die Beleuchtungseinrichtung 10 um die Achse 52 zwischen ihrer eingeschwenkten Lage und ihrer ausgeschwenkten Lage verschwenkbar ist, richtet sich nach den Einbaubedingungen am Fahrzeug und kann beispielsweise etwa 10 bis 20° betragen. Beim dargestellten Ausführungsbeispiel ist die Beleuchtungseinrichtung 10 um einen Winkel von etwa 15° verschwenkbar.

Bei einer Weiterbildung der vorstehend erläuterten Befestigungsanordnung der Beleuchtungseinrichtung 10 sind wie in Figur 2 dargestellt die Abschnitte 22a,b,c des Gehäuses 12 sowie die Schalenbereiche 34a,b,c sowie die diese begrenzenden Wandungen 40,41 und 42 derart schräg angeordnet, daß diese in Auschwenkrichtung 49 der Beleuchtungseinrichtung 10 in Richtung der Schwenkachse 52 unter einem Winkel α ansteigen. Hierdurch wird erreicht, daß die Beleuchtungseinrichtung 10 bei der Verschwenkung um die Achse 52 beim Einschwenken (Pfeilrichtung 48) in Richtung der Schwenkachse 52 nach unten bzw. beim Ausschwenken (Pfeilrichtung 49) in Richtung der Schwenkachse 52 nach oben bewegt wird. Bei der Montage der Beleuchtungseinrichtung 10 braucht diese somit nicht direkt in die beengte Aufnahme eingeführt zu werden, sondern kann etwas höher angesetzt werden als die Aufnahme und beim Einschwenken wird die Beleuchtungseinrichtung 10 in die Aufnahme abgesenkt. Beim Ausbau der Beleuchtungseinrichtung 10 wird diese beim Ausschwenken aus der beengten Aufnahme etwas angehoben und kann dabei einfach gehandhabt werden.

Beim dargestellten Ausführungsbeispiel ist der Aufnahmeteil 32 als separates Bauteil an einem Frontteil 16 des Fahrzeugs befestigt. Der Aufnahmeteil 32 weist einen nach oben von diesem abstehenden Träger 62 und einen nach unten von diesem abstehenden Träger 64 auf, die jeweils beispielsweise mittels einer Schraube 63 bzw. 65 am Frontteil 16 lösbar befestigbar sind. Es kann hierbei vorgesehen sein, daß bei der ersten Montage der Beleuchtungseinrichtung 10 beim Zusammenbau des Fahrzeugs beim Fahrzeughersteller der Aufnahmeteil 32 an der Beleuchtungseinrichtung 10 vormontiert ist. Der Aufnahmeteil 32 kann dabei beispielsweise mittels einer Sicherungsschraube 66 in der an diesem eingeschwenkten Lage der Beleuchtungseinrichtung 10 fixiert werden, um ein Lösen des Aufnahmeteils 32 von der Beleuchtungseinrichtung 10 vor deren Montage am Fahrzeugteil 16 zu verhindern. Alternativ kann auch vorgesehen sein, daß eine Fixierung des Aufnahmeteils 32 an der Beleuchtungseinrichtung 10 mittels einer lösbaren Rastverbindung erfolgt. Die Beleuchtungseinrichtung 10 wird zusammen mit dem Aufnahmeteil 32 am Fahrzeug montiert, bevor dieses komplett montiert ist, wobei nach der Montage der Beleuchtungseinrichtung 10 beispielsweise noch ein Stoßfänger 68 oder sonstiges Frontteil am Fahrzeug montiert wird, das die Träger 62 und 64 des Aufnahmeteils 32 überdeckt. Die Beleuchtungseinrichtung 10 wird am Fahrzeug über den Träger 18 am Gehäuse 12 mittels der Schraube 20 und über den Aufnahmeteil 32 mittels der Schrauben 63 und 65 befestigt. Bei komplett montiertem Fahrzeug wäre der Aufnahmeteil 32 nicht mehr entfernbar ohne daß zuerst der Stoßfänger 68 entfernt würde. Die vorstehend erläuterte Ausbildung der Befestigungsanordnung ermöglicht es jedoch, daß zu einem Ausbau der Beleuchtungseinrichtung 10 im Reparatur- oder Servicefall nur die Schraube 20 sowie die Sicherungsschraube 66 entfernt zu werden brauchen, so daß die Beleuchtungseinrichtung 10 am Aufnahmeteil 32 um die Achse 52 ausgeschwenkt werden kann und entgegen Pfeilrichtung 50 aus der Aufnahme herausgenommen werden kann, wobei der Aufnahmeteil 32 am Fahrzeug verbleibt. Die Sicherungsschraube 66 ist dabei derart angeordnet, daß diese ohne den Ausbau von Fahrzeugteilen zugänglich ist. Der Wiedereinbau der Beleuchtungseinrichtung 10 und deren Befestigung erfolgt dann wie vorstehend erläutert durch Einführung am Aufnahmeteil 32 und Anbringung der Schraube 20 am Träger 18.

Alternativ zu der vorstehend beschriebenen Ausführung kann der Aufnahmeteil 32 auch fest am Frontteil 16 oder einem anderen Teil des Fahrzeugs angeordnet sein oder einstückig mit diesem ausgebildet sein. In diesem Fall erfolgt die Montage und der Ausbau der Beleuchtungseinrichtung 10 wie vorstehend erläutert jeweils durch Einführen der Abschnitte 22 des Gehäuses 12 in die Schalenbereiche 34 des Aufnahmeteils 32 und Einschwenken um die Achse 52 sowie Anbringen der Schraube 20 bzw. durch Entfernen der Schraube 20 und Ausschwenken um die Achse 52. Die Sicherungsschraube 66 ist in diesem Fall nicht erforderlich und kann entfallen.

Abweichend zu der vorstehend beschriebenen Ausführung der Befestigungsanorndung mit vertikal verlaufender Schwenkachse 52 kann diese abhängig von den Einbauverhältnissen der Beleuchtungseinrichtung 10 am Fahrzeug auch beliebig anders verlaufen, beispielsweise horizontal oder geneigt. Dabei ist der wenigstens eine Abschnitt 22a,b,c des Gehäuses 12 der Beleuchtungseinrichtung 10 und der wenigstens eine Schalenbereich 34a,b,c des Aufnahmeteils 32 entsprechend in Ebenen senkrecht zur Schwenkachse konvex bzw. konkav gekrümmt ausgebildet.

## Patentansprüche

1. Befestigungsanordnung einer Beleuchtungseinrichtung an einem Fahrzeug, mit mehreren lösbaren, zueinander beabstandeten Befestigungsstellen, wobei die Beleuchtungseinrichtung (10) im Bereich wenigstens einer Befestigungsstelle nach Lösen einer zu dieser beabstandeten Befestigungsstelle um eine Achse (52) zwischen eine eingeschwenkten Lage und einer ausgeschwenkten Lage verschwenkbar ist, und wobei am Fahrzeug ein Aufnahmeteil (32) angeordnet ist, das einen Schalenbereich aufweist und wobei die Beleuchtungseinrichtung (10) wenigstens einen Abschnitt (22a,b,c) aufweist, der in Ebenen senkrecht zur Schwenkachse (52) konvex gekrümmt ist, **dadurch gekennzeichnet, daß** der Schalenbereich in Ebenen senkrecht zur Schwenkachse (52) konkav gekrümmt ist daß der wenigstens eine Abschnitt (22a,b,c) der Beleuchtungseinrichtung (10) in deren ausgeschwenkter Lage in den wenigstens einen Schalenbereich (34a,b,c) des Aufnahmeteils (32) in bzw. entgegen einer Montagerichtung (50) einführbar bzw. entnehmbar ist und daß der wenigstens eine Abschnitt (22a,b,c) der Beleuchtungseinrichtung (10) in dem wenigstens einen Schalenbereich (34a,b,c) des Aufnahmeteils (32) gleitverschiebbar angeordnet ist, wobei bei einer Gleitverschiebung eine Verschwenkung um die Schwenkachse (52) erfolgt.

2. Befestigungsanordnung nach Anspruch 1, **dadurch gekennzeichnet, daß** wenigstens eine Verriegelungseinrichtung (28,36;30,38;31,39) vorgesehen ist, durch die die Beleuchtungseinrichtung (10) in ihrer eingeschwenkten Lage gegen Entnahme entgegen Montagerichtung (50) gesichert ist.

3. Befestigungsanordnung nach Anspruch 2, **dadurch gekennzeichnet, daß** die wenigstens eine Verriegelungseinrichtung durch einen Vorsprung (36) an einem der Teile Beleuchtungseinrichtung (10) oder Aufnahmeteil (32) und eine Ausnehmung (28) im anderen der Teile Aufnahmeteil (32) oder Beleuchtungseinrichtung (10) gebildet ist, wobei der Vorsprung (36) zur Verriegelung in die Ausnehmung (28) einführbar ist.

4. Befestigungsanordnung nach Anspruch 2, **dadurch gekennzeichnet, daß** die wenigstens eine Verriegelungseinrichtung durch einen Vorsprung (38) an einem der Teile Beleuchtungseinrichtung (10) oder Aufnahmeteil (32) und einen Haken (30) am anderen der Teile Aufnahmeteil (32) oder Beleuchtungseinrichtung (10) gebildet ist, wobei der Haken (30) zur Verriegelung den Vorsprung (38) hintergreift.

5. Befestigungsanordnung nach einem der Ansprüche 2 bis 4, **dadurch gekennzeichnet, daß** die wenigstens eine Verriegelungseinrichtung (28,36;30,38;31,39) in Einschwenkrichtung (48) der Beleuchtungseinrichtung (10) in Eingriff gelangt und in deren Ausschwenkrichtung (49) außer Eingriff gelangt.

6. Befestigungsanordnung nach einem der vorstehenden Ansprüche, **dadurch gekennzeichnet, daß** die Beleuchtungseinrichtung (10) mehrere in Richtung der Schwenkachse (52) zueinander versetzte Abschnitte (22a,b,c) und der Aufnahmeteil (32) entsprechend mehrere in Richtung der Schwenkachse (52) zueinander versetzte Schalenbereiche (34a,b,c) aufweist, wobei jeweils einer der Abschnitte (22a,b,c) in einem der Schalenbereiche (34a,b,c) gleitverschiebbar angeordnet ist.

7. Befestigungsanordnung nach einem der vorstehenden Ansprüche, **dadurch gekennzeichnet, daß** der wenigstens eine Abschnitt (22a,b,c) der Beleuchtungseinrichtung (10) am wenigstens einen Schalenbereich (34a,b,c) in Richtung der Schwenkachse (52) unverschiebbar geführt ist.

8. Befestigungsanordnung nach Anspruch 7, **dadurch gekennzeichnet, daß** der wenigstens eine Abschnitt (22a,b,c) und der wenigstens eine Schalenbereich (34a,b,c) in Ausschwenkrichtung (49) der Beleuchtungseinrichtung (10) in Richtung der Schwenkachse (52) ansteigend oder abfallend verlaufen.

9. Befestigungsanordnung nach Anspruch 7 oder 8, **dadurch gekennzeichnet, daß** der wenigstens eine Schalenbereich (34a,b,c) in Richtung der Schwenkachse (52) beiderseits durch jeweils eine Wandung (40,41) begrenzt ist, zwischen denen der wenigstens eine Abschnitt (22a,b,c) angeordnet ist.

10. Befestigungsanordnung nach einem der vorstehenden Ansprüche, **dadurch gekennzeichnet, daß** zwischen dem wenigstens einen Abschnitt (22a,b,c) der Beleuchtungseinrichtung (10) und dem Aufnahmeteil (32) wenigstens ein federndes Element (44) unter in Richtung der Schwenkachse (52) wirkender Vorspannung angeordnet ist.

11. Befestigungsanordnung nach einem der vorstehenden Ansprüche, **dadurch gekennzeichnet, daß** der Aufnahmeteil (32) als separates Bauteil ausgebildet ist, das an einem Fahrzeugteil (16) befestigbar ist.

12. Befestigungsanordnung nach Anspruch 11, **dadurch gekennzeichnet, daß** für die Erstmontage des Fahrzeugs die Beleuchtungseinrichtung (10) am Aufnahmeteil (32) in ihrer eingeschwenkten Lage angeordnet ist und mit diesem eine vormontierte Baueinheit bildet, die am Fahrzeug befestigt wird und daß zu einem nachfolgenden Aus- bzw. Einbau der Beleuchtungseinrichtung (10) im Servicefall der Aufnahmeteil (32) am Fahrzeug befestigt bleibt und die Beleuchtungseinrichtung (10) vom Aufnahmeteil (32) durch Schwenken in Ausschwenkrichtung (49) gelöst bzw. in Einschwenkrichtung (48) befestigt wird.

13. Befestigungsanordnung nach einem der Ansprüche 1 bis 10, **dadurch gekennzeichnet, daß** der Aufnahmeteil (32) einstückig an einem Fahrzeugteil (16) ausgebildet ist.

## Claims

1. A mounting arrangement of an illumination device on a vehicle, comprising a plurality of detachable mounting points that are distanced from each other, the illumination device (10) in the area of at least one mounting point, after detachment, being able to swing about an axis (52) between a swung-in position and a swung-out position, a receiving part (32) that has a bowl-shaped area **[(34 a,b,c)]** being arranged on the vehicle, and the illumination device (10) having at least one section (22 a,b,c), which in planes that are perpendicular to the swiveling axis (52) is curved in a convex manner, wherein the bowl-shaped area in planes that are perpendicular to the swiveling axis (52) is curved in a concave manner, the at least one section (22 a,b,c) of the illumination device (10) in its swung-out position can be inserted into or removed from the at least one bowl-shaped area (34 a,b,c) of the receiving part (32) in an installation direction (50) or in a direction opposite thereto, and the at least one section (22 a,b,c) of the illumination device (10) in the at least one bowl-shaped area (34 a,b,c) of the receiving part (32) is arranged so as to move in a sliding fashion, a swinging about the swiveling axis (52) resulting from a sliding motion.

2. The mounting arrangement as recited in Claim 1, wherein at least one locking device (28, 36; 30, 38; 31, 39) is provided, by which the illumination device (10) in its swung-in position is secured against being removed in a direction opposite the installation direction (50).

3. The mounting arrangement as recited in Claim 2, wherein the at least one locking device is formed by a projection (36) on one of the following parts, the illumination device (10) or the receiving part (32), and by a recess (28) in the respective other of the following parts, the receiving part (32) or the illumination device (10), the projection (36) being able to be inserted into the recess (28) for purposes of locking.

4. The mounting arrangement as recited in Claim 2, wherein the at least one locking device is formed by a projection (38) on one of the following parts, the illumination device (10) or the receiving part (32), and by a hook (30) on the respective other of the following parts, the receiving part (32) or the illumination device (10), the hook (30) grasping the projection (38) from behind for purposes of locking.

5. The mounting arrangement as recited in any of Claims 2 to 4, wherein the at least one locking device (28, 36; 30, 38; 31, 39) engages in the swung-in direction (28) of the illumination device (10) and disengages in its swung-out direction (49).

6. The mounting arrangement as recited in any of the preceding claims, wherein the illumination device (10) has a plurality of sections (22 a,b,c) that are offset with respect to each other in the direction of the swiveling axis (52), and the receiving part (32) correspondingly has a plurality of bowl-shaped areas (34 a,b,c) that are offset with respect to each other in the direction of the swiveling axis (52), each of the sections (22 a,b,c) being disposed in one of the bowl-shaped areas (34 a,b,c) so as to move in a sliding fashion.

7. The mounting arrangement as recited in any of the preceding claims, wherein the at least one section (22 a,b,c) of the illumination device (10) at at least one bowl-shaped area (34 a,b,c) is unmovably guided in the direction of the swiveling axis (52).

8. The mounting arrangement as recited in Claim 7, wherein, in the swung-out direction (49) of the illumination device (10), the at least one section (22 a,b,c) and the at least one bowl-shaped area (34 a,b,c) have either a rising or falling slope in the direction of the swiveling axis (52).

9. The mounting arrangement as recited in Claim 7 or 8, wherein the at least one bowl-shaped area (34 a,b,c) in the direction of the swiveling axis (52) is bordered on both sides by a wall (40, 41), between which the at least one section (22 a,b,c) is disposed.

10. The mounting arrangement as recited in any of the preceding claims, wherein between the at least one section (22 a,b,c) of the illumination device (10) and the receiving part (32) at least one spring element (44) is arranged with a biasing in the direction of the swiveling axis (52).

11. The mounting arrangement as recited in any of the preceding claims, wherein the receiving part (32) is configured as a separate component, which can be mounted on a vehicle part (16).

12. The mounting arrangement as recited in Claim 11, wherein for the inital assembly of the vehicle the illumination device (10) is arranged on the receiving part (32) in its swung-in position and constitutes along with the latter a preassembled component that is mounted on the vehicle, and, in being serviced, the receiving part (32) remains attached to the vehicle for purposes of a subsequent removal or installation of the illumination device (10), and the illumination device (10) is separated from the receiving part (32) by being swung in the swung-out direction (49) and is installed in the swung-in direction (48).

13. The mounting arrangement as recited in any of Claims 1 to 10, wherein the receiving part (32) is configured as an integral part of a vehicle part (16).

## Revendications

1. Dispositif de fixation d'un bloc optique sur un véhicule, comportant plusieurs points de fixation détachables espacés les uns des autres, le bloc optique (10) pouvant pivoter autour d'un axe (52) entre une position pivotée vers l'intérieur et une position pivotée vers l'extérieur dans la zone d'au moins un point de fixation une fois détaché un point de fixation espacé de ce dernier, et sur le véhicule est disposé un élément de réception (32) qui présente une zone hémisphérique qui est courbée dans le sens concave dans des plans perpendiculaires à l'axe de pivotement (52), et le bloc optique (10) présentant au moins une section (22a, b, c) qui est courbée dans le sens convexe dans des plans perpendiculaires à l'axe de pivotement (52), **caractérisé en ce que** la au moins une section (22a, b, c) du bloc optique (10) peut, dans la position pivotée vers l'extérieur de ce dernier, être introduite dans et/ou enlevée de la au moins une zone hémisphérique (34a, b, c) de l'élément de réception (32) dans le sens du montage (50) et/ou dans le sens inverse, et **en ce que** la au moins une section (22a, b, c) du bloc optique (10) est disposée dans la au moins une zone hémisphérique (34a, b, c) de l'élément de réception (32) de manière à se déplacer par coulissement, un déplacement par coulissement produisant un pivotement autour de l'axe de pivotement (52).

2. Dispositif de fixation selon la revendication 1, **caractérisé en ce qu'**est prévu au moins un dispositif de verrouillage (28, 36 ; 30, 38 ; 31, 39) par lequel, dans la position pivotée vers l'intérieur, le bloc optique (10) est protégé contre un enlèvement dans le sens inverse de celui du montage (50).

3. Dispositif de fixation selon la revendication 2, **caractérisé en ce que** le au moins un dispositif de verrouillage est formé par une partie saillante (36) sur un des éléments du bloc optique (10) ou de l'élément de réception (32) et un évidement (28) dans un des autres éléments de l'élément de réception (32) ou du bloc optique (10), la partie saillante (36) pouvant être introduite dans l'évidement (28) pour le verrouillage.

4. Dispositif de fixation selon la revendication 2, **caractérisé en ce que** le au moins un dispositif de verrouillage est formé par une partie saillante (36) sur un des éléments du bloc optique (10) ou de l'élément de réception (32) et un crochet (30) dans un des autres éléments de l'élément de réception (32) ou du bloc optique (10), le crochet (30) engrenant la partie saillante (38) par derrière pour le verrouillage.

5. Dispositif de fixation selon une des revendications 2 à 4, **caractérisé en ce que** le au moins un dispositif de verrouillage (28, 36 ; 30, 38 ; 31, 39) s'engrène dans le sens de pivotement vers l'intérieur (48) du bloc optique (10) et ne s'engrène pas dans son sens de pivotement vers l'extérieur (49).

6. Dispositif de fixation selon une des revendications précédentes, **caractérisé en ce que** le bloc optique (10) présente plusieurs sections (22a, b, c) décalées les unes par rapport aux autres dans le sens de l'axe de pivotement (52), et **en ce que** l'élément de réception (32) présente de manière correspondante, plusieurs zones hémisphériques (34a, b, c) décalées les unes par rapport aux autres dans le sens de l'axe de pivotement (52), chacune des sections (12a, b, c) étant disposée de manière à se déplacer par coulissement dans une des zones hémisphériques (34a, b, c).

7. Dispositif de fixation selon une des revendications précédentes, **caractérisé en ce que** la au moins une section (22a, b, c) du bloc optique (10) est guidée sur au moins une zone hémisphérique (34a, b, c) de manière à ne pas se déplacer dans le sens de l'axe de pivotement (52).

8. Dispositif de fixation selon la revendication 2, **caractérisé en ce que** la au moins une section (22a, b, c) et la au moins une zone hémisphérique (34a, b, c) sont placées dans le sens de pivotement vers l'extérieur (49) du bloc optique (10) en position ascendante ou descendante dans le sens de l'axe de pivotement (52).

9. Dispositif de fixation selon la revendication 7 ou 8, **caractérisé en ce que** la au moins une zone hémisphérique (32a, b, c) est limitée de chaque côté dans le sens de l'axe de pivotement (52) par des parois (40, 41) entre lesquelles est disposée la au moins une section (22a, b, c).

10. Dispositif de fixation selon une des revendications précédentes, **caractérisé en ce que** entre la au moins une section (22a, b, c) du bloc optique (10) et l'élément de réception (32), est disposé au moins un élément élastique (44) précontraint dans le sens de l'axe de pivotement (52).

11. Dispositif de fixation selon une des revendications précédentes, **caractérisé en ce que** l'élément de réception (32) est conçu sous la forme d'un élément séparé, qui peut être fixé sur un élément du véhicule.

12. Dispositif de fixation selon la revendication 11, **caractérisé en ce que**, pour le premier montage du véhicule, le bloc optique (10) est disposé sur l'élément de réception (32) dans sa position pivotée vers l'intérieur et forme avec ce dernier un ensemble pré-monté qui est fixé sur le véhicule, et **en ce que**, pour le montage et le démontage ultérieurs du bloc optique à des fins d'entretien, l'élément de réception (32) reste fixé sur le véhicule, et le bloc optique (10) est détaché de l'élément de réception (32) par pivotement dans le sens de pivotement vers l'extérieur (49) et/ou fixé dans le sens de pivotement vers l'intérieur (48).

13. Dispositif de fixation selon une des revendications 1 à 10, **caractérisé en ce que** l'élément de réception (32) est formé d'une seule pièce sur un élément (16) du véhicule.
